# EUROPÄISCHE PATENTSCHRIFT

(11) **EP 1 475 269 B1**
(45) Veröffentlichungstag und Bekanntmachung des Hinweises auf die Patenterteilung: **20.08.2008**
(21) Anmeldenummer: 04008400.6
(22) Anmeldetag: 07.04.2004
(51) Int. Cl.: B60Q 1/14

(54) **Nachtsichtsystem**
Night vision system
Système de vision nocturne

(30) Priorität: 05.05.2003 DE 10320083
(43) Veröffentlichungstag der Anmeldung: 10.11.2004
(73) Patentinhaber: ROBERT BOSCH GMBH, 70442 Stuttgart (DE)
(72) Erfinder: Haug, Karsten, 70372 Stuttgart (DE)

(56) Entgegenhaltungen:
- EP-A- 0 479 634
- EP-A- 0 765 775
- EP-A- 1 281 571
- US-A1- 2002 154 515
- US-B1- 6 281 806
- PATENT ABSTRACTS OF JAPAN Bd. 1999, Nr. 03, 31. März 1999 (1999-03-31) -& JP 10 324208 A (KANSEI CORP), 8. Dezember 1998 (1998-12-08)

## Beschreibung

### Stand der Technik

Die Erfindung betrifft ein Bedienelement und ein Verfahren in einem Kraftfahrzeug zur Bedienung eines kameraunterstützten Nachtsichtsystems, sowie ein Nachtsichtsystem.

Systeme zur Nachtsichtunterstützung (Nachtsichtsysteme, Night-Vision-Systems, Night-View-Systems) halten vermehrt Einzug in Kraftfahrzeuge. Diese haben zum Ziel, die Sicht in Bezug auf Qualität, Reichweite und Informationsgehalt des menschlichen Fahrers durch Einsatz von Kameras und Displays bei Nacht zu verbessern, ohne potentiellen Gegenverkehr zu blenden, wie dies beim konventionellen Fernlicht der Fall wäre. Die Nachtsichtunterstützung wird durch Einsatz von Wellenlängenbereichen erreicht, die für das menschliche Auge nicht sichtbar sind. Diese werden über Kameras und Displays dem Menschen zugänglich gemacht. Ein derartiges Nachsichtsystem ist beispielsweise aus der DE 40 32 927 A1 bekannt.

Aus der EP 0 479 634 A1 ist eine Scheinwerfereinrichtung für Fahrzeuge bekannt, wobei die Einrichtung einen Umschalter umfasst, der durch den Fahrer betätigt werden kann, um eine Stellung zum Anmachen der Abblendlichter oder eine Stellung zum Anmachen der Fernscheinwerfer einnehmen kann.

### Vorteile der Erfindung

Das nachfolgend beschriebene Bedienelement mit den Merkmalen des unabhängigen Patentanspruchs hat den Vorteil, dass das Displaybild nur dann aktiv ist, wenn der Fahrer es auch nutzen will bzw. wenn es ihn nicht stört. In allen anderen Fällen kann es sehr schnell deaktiviert werden. Dies führt zu einer vorteilhaften Verbesserung der positiven Aspekte des Nachtsichtsystems, indem die Nutzungsdauer des Nachtsichtsystems erhöht wird, da es auch kurzfristig aktiviert werden kann. In diesen Fällen wäre es bisher nicht aktiviert worden, da die Situation schon wieder vorüber wäre, bevor der Fahrer das System beispielsweise am Armaturenbrett überhaupt aktivieren hätte können. Indem das Bedienelement wenigstens eine Betriebsart eines Scheinwerfer des Kraftfahrzeuges und wenigstens eine Betriebsart des Nachtsichtsystems schaltet, wird in vorteilhafter weise erreicht, dass das Nachtsichtsystem kurzfristig angeschaltet und/oder abgeschalten werden kann. In diesen Phasen wird der Fahrer nicht vom Displaybild abgelenkt.

Besonders vorteilhaft ist ferner, dass das Bedienelement eine Ermüdung des Fahrers durch nicht genutzte Informationsflut vermindert. Dies führt zu einer vorteilhaften Erhöhung der Akzeptanz des Systems. Ferner wird das Nutzerverhalten dem bisherigem Nutzerverhalten angepasst. Bisher ist Abblendlicht die Grundeinstellung (Default-Modus), der nur verlassen wird, wenn mehr Sicht erforderlich ist. Hierzu wird bei konventionellen Fahrzeugen ohne Night-Vision das Fernlicht aktiviert. Das Fernlicht kann jedoch blitzschnell wieder deaktiviert werden, wenn beispielsweise Gegenverkehr auftaucht oder man in ein Nebelfeld einfährt, wo das Fernlicht nur stört. Ferner wird heutzutage das Fernlicht auch ganz kurz, teilweise trotz Gegenverkehr, aktiviert, um sich einen schnellen Überblick über die Szene zu verschaffen. Dies kann durch das nachfolgend beschriebenen Bedienelement in vorteilhafter Weise nun auch bei Gegenverkehr erfolgen, indem kurzfristig das Display angeschaltet und betrachtet wird.

Vorteilhaft ist, dass das nachfolgend beschriebene Bedienelement die Ablenkung des Fahrers durch das HMI (Human Machine Interface, Mensch-Maschinen-Schnittstelle), beispielsweise ein HUD (Head-up-Display) oder ein Kombidisplay, verringert. Gegenüber dem Ein- und Ausschalten des Nachtsichtsystems am Armaturenbrett, ist es besonders vorteilhaft, dass das Nachtsichtsystem, insbesondere das Display, kurzfristig an- und/oder abgeschaltet werden kann. So ist zum einen ein kurzfristiges Aktivieren möglich, um einen kurzen Blick auf das Nachtsichtbild werfen zu können, zum anderen kann das System auch kurzfristig deaktiviert werden, wenn die Information als störend oder ablenkend empfunden wird. Vergleicht man das Bedienverhalten mit dem bisherigen Fernlichtmodus, der ebenfalls zur Sichtverbesserung eingesetzt wird, so liegt dessen Stärke in seiner raschen Aktivier- und/oder Deaktivierbarkeit durch Bedienung über einen Lenkstockschalter.

Besonders vorteilhaft ist, dass das Bedienelement ein mechanisches Bedienelement, insbesondere ein Lenkstockhebel, ist, da dies eine besonders einprägsame Bedienungsart ist, da ein klares und einfaches Konzept, das rein mechanisch realisierbar ist, zugrunde liegt, wobei nur eine begrenzte Anzahl von Übergängen zwischen den Modi möglich sind.

Vorteilhaft ist ferner ein Nachtsichtsystem in einem Kraftfahrzeug, wobei das Nachtsichtsystem derart konfiguriert ist, dass das Nachtsichtsystem durch ein einziges nachfolgend beschriebenes Bedienelement eingestellt wird. Ferner ist ein Verfahren zur Bedienung eines kameraunterstützten Nachtsichtsystems in einem Kraftfahrzeug vorteilhaft, bei dem mittels eines einzigen, nachfolgend beschriebenen Bedienelements wenigstens eine Betriebsart eines Scheinwerfers des Kraftfahrzeuges und wenigstens eine Betriebsart des Nachtsichtsystems geschaltet wird.

Weitere Vorteile ergeben sich aus der nachfolgenden Beschreibung von Ausführungsbeispielen mit Bezug auf die Figur und aus den abhängigen Patentansprüchen.

### Zeichnung

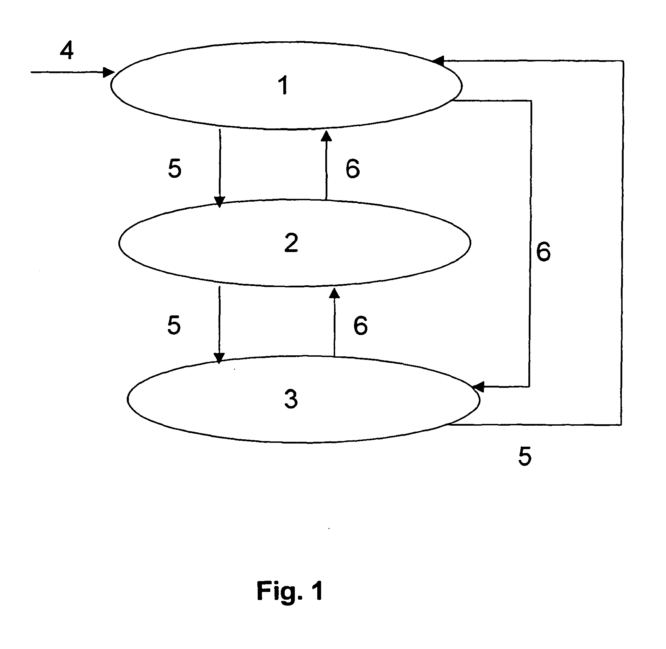

Die Erfindung wird nachstehend anhand der in der Zeichnung dargestellten Ausführungsformen näher erläutert. Die einzige Figur 1 zeigt ein Zustandsdiagramm.

### Beschreibung von Ausführungsbeispielen

Nachfolgend wird ein Bedienelement und ein Verfahren in einem Kraftfahrzeug zur Bedienung eines kameraunterstützten Nachtsichtsystems beschrieben. Das Bedienelement ist derart gestaltet, dass das Bedienelement zum Schalten wenigstens einer Betriebsart eines Scheinwerfer des Kraftfahrzeuges und wenigstens einer Betriebsart des Nachtsichtsystems geeignet ist.

### Kameratechnologien:

Im wesentlichen werden für Nachtsichtsysteme momentan zwei Wellenlängenbereiche genutzt: Nahes Infrarot (NIR) mit Wellenlängen zwischen ca. 800nm bis 1100nm und fernes Infrarot (FIR) mit Wellenlängen zwischen ca. 7 um bis 12 um. Diese Wahl bestimmt die verwendete Kameratechnologie oder auch umgekehrt, indem die verfügbaren Kameratechnologien bestimmen, welche Spektren genutzt werden. Für NIR werden heutzutage CCD oder CMOS-Kameras eingesetzt, die aufgrund der spektralen Empfindlichkeit des verwendeten Siliziums neben dem sichtbaren Spektrum auch für NIR geeignet sind. Für FIR werden Wärmebildkameras eingesetzt, die beispielsweise auf Mikrobolometern oder pyroelektrischen Prinzipien beruhen.

### Scheinwerfer-Technologien:

Bei NIR-Systemen sind Scheinwerfer erforderlich, welche die Szene mit NIR-Licht beleuchten. Hierfür werden Halogenbirnen benutzt, deren sichtbares Spektrum durch Filter ganz oder teilweise ausgeblendet wird. Da FIR auf der Wärmestrahlung der Objekte beruht, ist hierfür keine Beleuchtung erforderlich.

### Display-Technologien:

Ein Display ist erforderlich, um die Information der Kameras dem Fahrer zugänglich zu machen. Im wesentlichen sind zwei Displaytypen zu unterscheiden: konventionelle Displays im Kombiinstrument (Kombidisplay): Hierfür werden TFT- oder LCD-Displays ins Kombiinstrument integriert. Wie beim Blick auf den Tachometer muss der Fahrer von Fernblick (Akkomodation auf unendliche Entfernung) jedes Mal auf Nahblick akkomodieren, um das Kombidisplay zu betrachten. Hierfür wird relativ lange Zeit benötigt. Vorteilhaft ist die gute Bildqualität dieser Displays. Head-up-Displays (HUD): Diese versuchen die Akkomodationszeit zu verkürzen, indem unter Zuhilfenahme der Windschutzscheibe oder von Hilfsflächen, beispielsweise Combiner-Spiegeln, ein virtuelles Bild erzeugt wird, das vom Fahrer deutlich weiter entfernt liegt als das Kombiinstrument.

Die Aktivierung und Deaktivierung des Nachtsichtsystems erfolgt im bevorzugten Ausführungsbeispiel analog zum bisherigen Fernlichtmodus über einen Lenkstockschalter oder ähnliche, vom Fahrer schnell zu bedienende Elemente. Das Nachtsichtsystem wird dann so genutzt, dass es nur dann aktiv ist, wenn der Fahrer das Displaybild auch betrachten will. Das Bedienkonzept des Nachtsichtsystem ist damit in das Bedienkonzept der Lichtmodi der Scheinwerfer integriert. Der Nachtsichtmodus ist dann ein Modus im Rahmen mehrerer Lichtmodi. Im bevorzugten Ausführungsbeispiel wird vorzugsweise das Ein- und/oder Ausschalten des Displays durchgeführt. Alternativ oder zusätzlich werden andere Systemkomponenten, wie Kamera und/oder NIR-Scheinwerfer, aktiviert und/oder deaktiviert, wobei dies von deren Zeitkonstanten und/oder deren Einschaltverhalten und/oder deren Ausschaltverhalten abhängt. Da nicht alle Komponenten so schnell wie das Display ein- und ausgeschaltet werden können, wird in einer Variante alternativ oder zusätzlich ein mehrstufiges Konzept wie für die bisherige Lichtschaltung benutzt. Über Schalter am Armaturenbrett und/oder über wenigstens einen Lichtsensor erfolgt die grundsätzliche Aktivierung, während das Umschalten des Modus über einen Lenkstockschalter erfolgt. Ferner werden alternativ oder zusätzlich weitere Gesichtspunkte, wie die Lebensdauer der NIR-Scheinwerfer und/oder die Lebensdauer der Kamera und/oder die Verlustleistung von Komponenten, bei der Abschaltstrategie mit berücksichtigt.

Im bevorzugten Ausführungsbeispiel ist der Ort der Betätigung der Lenkstockschalter, entsprechend dem bisheriger Umschalter zwischen Abblend- und Fernlicht. Alternativ oder zusätzlich werden anderen Bedienkonzepte, die schnelles Umschalten von Modi ohne größeres Umgreifen der Hände ermöglichen, eingesetzt, wie beispielsweise
- Tasten auf dem Lenkrad, und/oder
- Sprachbasierte Betätigung durch Voice-Control, und/oder
- Umschalten durch Beobachtung des Blickwinkels des Fahrers über Kamerasystem für Innenraum .

Als Umschaltmodi werden alternativ oder zusätzlich stationäre Umschaltkonzepte und/oder State-Machine-basierte Umschaltkonzepte eingesetzt. Beispielsweise weist bei Stationären Konzepten der Lenkstockhebel für Lichtmodus eine weitere stationäre Stufe für Nachtsicht-Betrieb auf. Während bei reinen Lenkstockhebeln für Lichtmodus beispielweise in der Mitte das Abblendlicht und hinten das Fernlicht ist, befindet sich im bevorzugten Ausführungsbeispiel in der Mitte das Abblendlicht, hinten das Fernlicht und vorne die Nachtsichtunterstützung zusammen mit dem Abblendlicht. Bei State-Machine-basierten Umschaltkonzepten, wird zwischen verschiedenen States (Zustände) hin- und hergeschaltet. Gegenüber einer stationären Bedienung sind so mit wenigen Eingangsbefehlen, beispielsweise mit den zwei Befehlen auf ("up") und ab ("down"), mehr Zustände, beispielsweise die drei Zustände "Abblendlicht", "Fernlicht" und "Night-Vision und Abblendlicht", möglich. Die Übergangsbedingungen werden vorzugsweise mit tasterbasierten Lenkstockschaltern generiert. So wird beispielsweise nach vorne und/oder nach hinten kurz gezogen, um die beiden Übergangsbedingungen "up" und "down" zu realisieren. Figur 1 zeigt ein Zustandsdiagramm eines State-Machine-basierten Ansatzes mit den drei Zuständen "Abblendlicht" 1, "Fernlicht" 2 und "Night-Vision und Abblendlicht" 3. Bei der Initialisierung 4 wird standardmäßig der Zustand "Abblendlicht" 1 eingenommen. Durch den Zustandsübergang "up" 5 werden nacheinander Zustandswechsel vom Zustand "Abblendlicht" 1 zum Zustand "Fernlicht" 2 zum Zustand "Night-Vision und Abblendlicht" 3 und wieder zurück zum Ausgangszustand "Abblendlicht" 1 durchgeführt. Ferner sind durch den Zustandsübergang "down" 6 nacheinander Zustandswechsel vom Zustand "Abblendlicht" 1 zum Zustand "Night-Vision und Abblendlicht" 3 zum Zustand "Fernlicht" 2 und wieder zurück zum Ausgangszustand "Abblendlicht" 1 möglich. Zusätzliche weitere Übergangsbedingungen werden über Doppelklick-Konzepte und/oder weitere Dimensionen, wie Drehen und/oder Drücken und/oder oben/unten, realisiert, die momentan beispielsweise für andere Funktionen, wie Blinker, benutzt werden. Bei dieser Bedienung sind mehr Modi und mehr direkte Übergänge zwischen den Modi realisierbar. Bei dem oben geschilderten stationären Konzept mit drei Stellungen ist dagegen beispielsweise kein direkter Übergang zwischen Fernlicht und Nachtsicht möglich. State-Machine-basierte Ansätze sind daher für viele Modi besser geeignet. Alternativ oder zusätzlich werden Art und/oder Anzahl der Modi beim stationären Ansatz und/oder beim State-Machine-basiertem Ansatz über vorgeschaltete Schalter beschränkt, die nicht zwingend in Lenkradnähe angebracht sind. In einer Variante wird beispielsweise ein Schalter am Armaturenbrett für Standlicht und Abblend-/Fernlicht um einen Nachtsichtmodus zu erweitern. Nur wenn dieser Schalter aktiviert ist, kann der Nachtsichtmodus über ein Bedienelement, beispielsweise über den Lenkstockschalter, zusätzlich zum Abblend- und Fernlicht überhaupt aktiviert werden.

In einer weiteren Variante werden alternativ oder zusätzlich neben den bisher beschriebenen Modi, zwischen denen hin- und hergeschaltet werden kann, wie dem Modus Abblendlicht und/oder dem Modus Fernlicht und/oder dem Modus Nachtsicht mit Abblendlicht, die nachfolgenden Modi verwendet:
- Nachtsicht zusammen mit Fernlicht, und/oder
- Nachtsicht ohne Abblendlicht und ohne Fernlicht, beispielsweise bei militärischen Anwendungen, und/oder
- warnendes Nachtsicht bei dem im Displaybild potentielle Objekte eingeblendet und/oder markiert werden., wobei alternativ oder zusätzlich eine akustische Warnung erfolgt, und/oder
- Nachtsicht nur für Infrarotbereich, und/oder
- Nachtsicht für infrarot und sichtbaren Bereich gemeinsam, wobei der sichtbarer Bereich gegebenenfalls abgeschwächt ist.

In einer weiteren Variante werden alternativ oder zusätzlich bestimmte Modi und/oder Übergänge zwischen Modi, abhängig von anderen Informationen, wie Geschwindigkeitssignale und/oder Signale des Licht-Regensensors, blockiert oder unterdrückt. Beispielsweise wird in einer weiteren Variante alternativ oder zusätzlich ein Nachtsichtmodus bei NIR-Systemen für geringe Geschwindigkeiten unterdrückt, da die NIR-Scheinwerfer aus Gründen der Augensicherheit nicht aktiviert werden dürfen.

Als Modi des Aktivierens und/oder Deaktivierens der Anzeige werden alternativ oder zusätzlich durchgeführt
- An- und/oder Abschalten des Displays über Spannungsversorgung, und/oder
- Abdunkeln des Displays, beispielsweise durch Steuerung aller Pixel auf schwarz und/oder einen ergonomisch günstigen Dunkelzustand, und/oder
- Schließen einer mechanischen Abdeckung bei Head-up-Display (HUD), um beispielsweise Spiegeln zu vermeiden, und/oder
- Abschalten des Lasers bei projizierenden Head-up-Display (HUD), und/oder
- Wegklappen der Projektionsfläche bei Head-up-Displays (HUD), die nicht die Windschutzscheibe als Projektionsfläche nutzen.

Alle diese Maßnahmen sind derart ausgeführt, dass bei deaktiviertem Zustand des Nachtsichtsystems möglichst wenig Störung durch das Nachtsichtsystem ausgeht.

Bei NIR-Systemen werden in einer weiteren Variante alternativ oder zusätzlich parallel zum Aktivieren und/ oder Deaktivieren des Displays die NIR-Scheinwerfer aktiviert und/oder deaktiviert, um eine Blendung von Fahrzeugen zu verhindern, die ebenfalls ein NIR-Nachtsichtsystem eingebaut haben.

Alternativ oder zusätzlich werden in weiteren Varianten wenigstens eine der nachfolgend aufgeführten Maßnahmen eingesetzt:
- Als Kameratechnologie wird alternativ oder zusätzlich andere Kameratechnologien, wie beispielsweise Time-of-Flight-Kameras eingesetzt. Allgemein ist das beschriebenen Bedienelement zur Bedienung von Nachtsichtsystemen geeignet, die in irgendeiner Art andere zwei- oder dreidimensionale Kamera-Information dem Fahrer zugänglich macht.
- Ferner werden in einer weiteren Variante anstatt zweidimensionalen Displays dreidimensionale Displays verwendet, die beispielsweise auf holographischen Prinzipien beruhen.
- In einer weiteren Variante werden weitere Bedienfunktionen des Displays, wie Zoom oder Pan, in das Bedienkonzept des beschriebenen Bedienelements integriert. Hierfür eignet sich besonders gut ein State-Machine-basierter Ansatz.
- Ferner ist das Bedienelement bei vielen Kraftfahrzeugtypen, wie Personenkraftwagen und/oder Lastkraftwagen und/oder Motorräder einsetzbar. Insbesondere ist eine Erweiterung für alle Arten von Bedienständen möglich, welche die Sicht des Bedieners über Kameras erweitern.
- In einer weiteren Variante wird das Bedienelement zusätzlich bei Tagsichtanwendungen verwendet, die über Displays weitere Informationen dem Fahrer zugänglich machen und so neben zusätzlicher Information auch zu einer Ablenkung oder Gefährdung durch Informationsvielfalt führen können.

## Patentansprüche

1. Bedienelement für ein Kraftfahrzeug zur Bedienung eines kameraunterstützten Nachtsichtsystems, wobei das Bedienelement derart gestaltet ist, dass das Bedienelement zum Schalten wenigstens einer Betriebsart eines Scheinwerfer des Kraftfahrzeuges und wenigstens einer Betriebsart des Nachtsichtsystems geeignet ist,
**dadurch gekennzeichnet,**
**dass** das Bedienelement derart gestaltet ist, dass der Fahrer durch das einzige Bedienelement zwischen dem Modus Abblendlicht und dem Modus Fernlicht und dem Modus Nachtsicht mit Abblendlicht, bei dem das Nachtsichtsystem zusammen mit dem Abblendlicht aktiviert ist, hin- und herschalten kann.

2. Bedienelement nach Anspruch 1, **dadurch gekennzeichnet, dass** im Ausschaltzustand des Nachtsichtsystems wenigstens eine Kamera und/oder wenigstens ein Anzeigemittel des Nachtsichtsystems ausgeschaltet ist.

3. Bedienelement nach einem der vorhergehenden Ansprüche, **dadurch gekennzeichnet, dass** das Nachtsichtsystem wenigstens eine infrarotempfindliche Kamera umfasst.

4. Bedienelement nach einem der vorhergehenden Ansprüche, **dadurch gekennzeichnet, dass** das Bedienelement über wenigstens eine weitere Einrichtung konfiguriert und/oder Aktiviert/Deaktiviert werden kann.

5. Bedienelement nach einem der vorhergehenden Ansprüche, **dadurch gekennzeichnet, dass** das Bedienelement derart gestaltet ist, dass das Bedienelement eine stationären und/oder state-machine-basierte Bedienung ermöglicht.

6. Bedienelement nach Anspruch 1, **dadurch gekennzeichnet, dass** das Bedienelement ein mechanisches Bedienelement, insbesondere ein Lenkstockhebel, ist.

7. Bedienelement nach einem der vorhergehenden Ansprüche, **dadurch gekennzeichnet, dass** das Bedienelement sprachbasiert ist.

8. Nachtsichtsystem für ein Kraftfahrzeug in Kombination mit einem Bedienelement nach einem der vorhergehenden Ansprüche, **dadurch gekennzeichnet, dass** das Nachtsichtsystem derart konfiguriert ist, dass das Nachtsichtsystem durch das Bedienelement eingestellt wird.

9. Kraftfahrzeug mit einem Bedienelement nach einem der Ansprüche 1 bis 7, **dadurch gekennzeichnet, dass** das Bedienelement derart im Kraftfahrzeug angeordnet ist, dass der Fahrer zur Bedienung des Bedienelements beide Hände am Lenkrad belassen kann.

10. Verfahren zur Bedienung eines kameraunterstützten Nachtsichtsystems in einem Kraftfahrzeug, **dadurch gekennzeichnet, dass** mittels eines einzigen Bedienelements nach wenigstens einem der Ansprüche 1 bis 7 wenigstens eine Betriebsart eines Scheinwerfers des Kraftfahrzeuges und wenigstens eine Betriebsart des Nachtsichtsystems geschaltet wird.

## Claims

1. Operator control for a motor vehicle for operating a camera-assisted night vision system, wherein the operator control is configured in such a way that the operator control is suitable for switching at least one operating mode of a headlight of the motor vehicle and at least one operating mode of the night vision system, **characterized in that** the operator control is switched in such a way that the driver can switch, by means of the single operator control, to and fro between the dipped headlight mode, the main beam mode and the night vision mode which has dipped headlights in which the night vision system is activated together with the dipped headlights.

2. Operator control according to Claim 1, **characterized in that** in the switched-off state of the night vision system at least one camera and/or at least one display means of the night vision system is switched off.

3. Operator control according to one of the preceding claims, **characterized in that** the night vision system comprises at least one infrared-sensitive camera.

4. Operator control according to one of the preceding claims, **characterized in that** the operator control can be configured and/or activated/deactivated by means of at least one further device.

5. Operator control according to one of the preceding claims, **characterized in that** the operator control is configured in such a way that the operator control permits stationary and/or state-machine-based operator control.

6. Operator control according to Claim 1, **characterized in that** the operator control is a mechanical operator control, in particular a steering lever.

7. Operator control according to one of the preceding claims, **characterized in that** the operator control is voice-based.

8. Night vision system for a motor vehicle in combination with an operator control according to one of the preceding claims, **characterized in that** the night vision system is configured in such a way that the night vision system is set by the operator control.

9. Motor vehicle having an operator control according to one of Claims 1 to 7, **characterized in that** the operator control is arranged in the motor vehicle in such a way that in order to operate the operator control the driver can leave both hands on the steering wheel.

10. Method for operating a camera-assisted night vision system in a motor vehicle, **characterized in that** using a single operator control according to at least one of Claims 1 to 7 at least one operating mode of a headlight of the motor vehicle and at least one operating mode of the night vision system are switched.

## Revendications

1. Elément de service d'un véhicule automobile pour manoeuvrer un système de vision nocturne utilisant une caméra, l'élément de service étant réalisé de façon qu'il permette la commutation d'au moins un mode de fonctionnement d'un projecteur du véhicule et d'au moins un mode de fonctionnement du système de vision nocturne,
**caractérisé en ce que**
l'élément de service est réalisé pour que le conducteur puisse commuter alternativement à l'aide de l'unique élément de service entre le mode de feux de croisement et le mode de feux longue portée et le mode de vision nocturne avec feux de croisement et selon lequel le système de vision nocturne est activé avec les feux de croisement.

2. Elément de service selon la revendication 1,
**caractérisé en ce qu'**
en position arrêtée du système de vision nocturne, au moins une caméra et/ou au moins un moyen d'affichage du système de vision nocturne est coupé.

3. Elément de service selon l'une des revendications précédentes,
**caractérisé en ce que**
le système de vision nocturne comporte au moins une caméra infrarouge.

4. Elément de service selon l'une des revendications précédentes,
**caractérisé en ce que**
l'élément de service peut être configuré et/ ou activé et/ ou désactivé par au moins une autre installation.

5. Elément de service selon l'une des revendications précédentes,
**caractérisé en ce que**
l'élément de service est conçu pour permettre une utilisation stationnaire et/ou une utilisation fondée sur une machine d'état.

6. Elément de service selon la revendication 1,
**caractérisé en ce que**
l'élément de service est un élément de service mécanique notamment un levier de colonne de direction.

7. Elément de service selon l'une des revendications précédentes,
**caractérisé en ce que**
l'élément de service utilise un signal vocal.

8. Système de vision nocturne de véhicule automobile en combinaison avec un élément de service selon l'une des revendications précédentes,
**caractérisé en ce que**
le système de vision nocturne est configuré pour que l'élément de service puisse régler le système de vision nocturne.

9. Véhicule automobile comportant un élément de service selon l'une des revendications 1 à 7,
**caractérisé en ce que**
l'élément de service est installé dans le véhicule automobile de façon que le conducteur puisse laisser ses deux mains sur le volant tout en actionnant l'élément de service.

10. Procédé de service d'un système de vision nocturne fondé sur une caméra dans un véhicule automobile,
**caractérisé en ce qu'**
à l'aide d'un unique élément de service selon au moins l'une des revendications 1 à 7, on commute au moins un mode de fonctionnement d'un projecteur du véhicule automobile et au moins un mode de fonctionnement du système de vision nocturne.
